(19) Europäisches Patentamt
European Patent Office
Office européen des brevets

(11) **EP 3 451 760 A1**

(12) **EUROPEAN PATENT APPLICATION**
published in accordance with Art. 153(4) EPC

(43) Date of publication:
**06.03.2019 Bulletin 2019/10**

(51) Int Cl.:
**H04W 72/04** (2009.01)

(21) Application number: **16898197.5**

(22) Date of filing: **12.04.2016**

(86) International application number:
**PCT/CN2016/079079**

(87) International publication number:
**WO 2017/177378 (19.10.2017 Gazette 2017/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent**
**91620 Nozay (FR)**

(72) Inventors:
• **SUN, Fanglei**
  **Shanghai 201206 (CN)**
• **YANG, Tao**
  **Shanghai 201206 (CN)**

(74) Representative: **DREISS Patentanwälte PartG mbB**
**Friedrichstraße 6**
**70174 Stuttgart (DE)**

(54) **METHOD AND DEVICE FOR SENDING AND RECEIVING CONTROL SIGNALING IN COMMUNICATIONS SYSTEM**

(57) Disclosed are a method and device for sending and receiving control signaling, and a computer program product. The method can be executed at an access node that is operated over a first carrier. The method comprises: determining a first resource in a first carrier for transmitting first control signaling, the bandwidth of the first resource being less than the total bandwidth of the first carrier; and sending the first control signaling to a device by means of the first resource, wherein the first control signaling comprises at least one of paging control information and system configuration information used by the device after accessing the node. The method and device in the embodiments of the present invention can enhance a control channel and improve the performance of control signaling to a device.

DETERMINE A FIRST RESOURCE IN A FIRST CARRIER FOR TRANSMITTING FIRST CONTROL SIGNALING, THE BANDWIDTH OF THE FIRST RESOURCE BEING LESS THAN THE TOTAL BANDWIDTH OF THE FIRST CARRIER — S201

SEND SECOND CONTROL SIGNALING TO THE DEVICE BY MEANS OF THE SECOND RESOURCE OTHER THAN THE FIRST RESOURCE, THE LOCATION AND THE SIZE OF THE SECOND RESOURCE IN THE FIRST CARRIER BEING FIXED, AND AT LEAST ONE OF THE LOCATION, THE SIZE, AND THE PERIODICITY OF THE FIRST RESOURCE BEING IMPLICITLY DETERMINED OR DETERMINED ON THE BASIS OF THE SECOND CONTROL SIGNALING — S203

SEND THE FIRST CONTROL SIGNALING TO A DEVICE BY MEANS OF THE FIRST RESOURCE, WHEREIN THE FIRST CONTROL SIGNALING COMPRISES AT LEAST ONE OF PAGING CONTROL INFORMATION AND SYSTEM CONFIGURATION INFORMATION USED BY THE DEVICE AFTER ACCESSING THE NODE — S202

SEND, BY MEANS OF THE FIRST CHANNEL OR A SECOND CHANNEL IN THE FIRST RESOURCE, INFORMATION FOR INDICATING A SUB-CONTROL REGION OUTSIDE THE FIRST RESOURCE — S204

200

Fig. 2a

## Description

## FIELD

Embodiments of the present disclosure generally relate to the field of wireless communications systems, and more specifically, to a method, an apparatus and a computer program product for transmitting control signaling between an access node and a device of a wireless communications system.

## BACKGROUND

The evolution of wireless communication networks always aims at improving network capacity and data rate. The fifth generation mobile communication system (5G) is being studied at the moment and the goal of the study on physical layer therein is to provide high performance in terms of data rate and latency with reduced cost and power consumption. The goal of the 5G system is introduced in a paper under the title of "What will 5G be?" written by Jeffrey G. A., Stefano B. and Wang Choi, et al. and published at IEEE JSAC special issues on 5G wireless communication system. To reach a data rate of gigabit-per-second for the next generation of mobile cellular communication standards (e.g., 5G), one option is to leverage the large bandwidths available at millimeter wave (mmw) frequency bands. However, when operating at the millimeter wave frequency bands, there will be many challenges for the wireless communications systems, for example, the propagation qualities of wireless channels are unfavorable, including strong path loss, atmospheric absorption and attenuation caused by rain and poor diffraction and penetration ability to objects when working on the millimeter wave frequency bands.

To overcome these unfavorable propagation qualities in the millimeter wave systems, large antenna arrays and narrowband beams has been proposed to be used for data transmission as key techniques. However, there still lacks an effective scheme for the transmission of control channel (such as downlink control channel) under the millimeter wave channel environment.

Therefore, enhancement to control channels should be considered for the millimeter wave systems. Embodiments of the present disclosure provide a method, an apparatus and a computer program product for delivering control signaling between an access node and a device, which can be applied into the above mentioned millimeter wave systems for enhancing the control channels. However, the embodiments are not limited to be applied in this system and should also be applicable to other scenarios having similar problems.

## SUMMARY

One purpose of the embodiments of the present disclosure is enhancing the control channel.

In a first aspect according to embodiments of the present disclosure, the purpose is realized by the method in the access node. The access node operates at a first carrier and the method comprises: determining, from a first carrier, a first resource for transmitting first control signaling, a bandwidth of the first resource being lower than a total bandwidth of the first carrier; and sending the first control signaling to a device with the first resource; wherein the first control signaling comprises at least one of paging control information and system configuration information used by the device after access.

In one embodiment, the first control signaling further includes broadcast control information to enable the device to perform an access procedure. In another embodiment, the broadcast control information is sent over a broadcast channel with the first resource and information of the first control signaling other than the broadcast control information is sent over a common control channel with the first resource. In another embodiment, the broadcast channel and the common control channel occupy adjacent resource regions in the first resource.

In another embodiment, the first control signaling comprises a plurality of control fields, and a sequence of the plurality of control fields and a type and a size of control information indicated by each of the plurality of control field are predetermined.

In one embodiment, the first control signaling includes a plurality of control information elements and each of the plurality of control information elements has a format of downlink control information (DCI) defined in a third generation partnership project (3GPP) long-term evolution (LTE) standard.

In another embodiment, the system configuration information in the first control signaling includes at least one of: at least part of information in a system information block (SIB) defined in a 3GPP LTE standard; information for updating configuration of the first resource; information for power control; and information for dynamic time division duplex (TDD) configuration.

In some embodiments, the method may include: sending second control signaling to a device with a second resource other than the first resource,, wherein both a location and a size of the second resource in the first carrier are fixed, and at least one of the location, the size, and periodicity of the first resource is implicitly determined or determined based on the second control signaling.

In another embodiment, determining, from the first carrier, a first resource for transmitting the first control signaling may include: determining, based on a predetermined size of the first resource and a location of the first resource in the first carrier, the first resource; or determining the first resource based on configuration information sent to the device in another control signaling.

In another embodiment, the first control signaling may further include information indicating a control sub-region outside the first resource; wherein the control sub-region is used for sending configuration signaling to the device, or used for sending the configuration signaling or scheduling signaling for data transmission.

In some embodiments, sending the first control signaling to the device with the first resource comprises: sending scheduling information of the first control signaling to the device over a first channel in the first resource; and sending detailed information of the first control signaling to the device over a second channel in the first resource; wherein the scheduling information indicates a location of respective control information of the first control signaling in the second channel. In another embodiment, location of the first channel and/or the second channel in the first resource may be predetermined, implicitly determined by the device, or signaled to the device. In another embodiment, sending scheduling information of the first control signal to the device over a first channel in the first resource comprises: sending, over a common search space (CSS) in the first channel, common scheduling information for common control signaling in the first control signaling to the device; and sending, over a UE-specific search space (USS) in the first channel, dedicated scheduling information for UE-specific control signaling in the first control signaling to the device. In another embodiment, the method also may include: sending information indicating a control sub-region outside the first resource over the first channel or the second channel; wherein the control sub-region is used for sending configuration signaling to the device, or used for sending the configuration signaling or scheduling signaling for data transmission. In some embodiments, the first channel may include a common search space (CSS) for sending common control signaling to the device; and the control sub-region may comprises a UE-specific search space (USS) for sending UE-specific control signaling to the device.

In one embodiment, a location and/or a size of the USS are configurable.

In one embodiment, sending the first control signaling to the device with the first resource may comprise: increasing a transmission power on the first resource by taking a power of other resources in the first carrier than the first resource; and sending the first control signaling using the increased transmission power.

In another embodiment, the first resource may be continuous resource in the aspect of time and/or frequency.

In a second aspect according to embodiments of the present disclosure, the purpose is realized by a method of receiving control signaling from an access node at a device of a wireless communication system. The access node operates at a first carrier, the method comprises: determining, from a first carrier, a first resource for receiving first control signaling, a bandwidth of the first resource being lower than a total bandwidth of the first carrier; and receiving the first control signaling from the access node with the first resource,; wherein the first control signaling includes at least one of paging control information and system configuration information used by the device after access.

In one embodiment, the first control signaling also comprises broadcast control information to enable the device to perform an access procedure.

In another embodiment, receiving the first control signaling from the access node with the first resource may comprise: receiving the broadcast control information over a broadcast channel, and receiving information of the first control signaling other than the broadcast control information over a common control channel, wherein the broadcast channel and the common control channel occupy adjacent resource regions in the first resource.

In some embodiments, the first control signaling can include a plurality of control fields, and a sequence of the plurality of control fields and a type and a size of control information indicated by each of the plurality of control field are predetermined.

In some other embodiments, the first control signaling may include a plurality of control information elements, and each of the plurality of control information elements has a format of downlink control information (DCI) defined in a third generation partnership project (3GPP) long-term evolution (LTE) standard.

In one embodiment, the system configuration information in the first control signaling may include at least one of: at least part of information in a system information block (SIB) defined in a third generation partnership project (3GPP) long-term evolution (LTE) standard; information for updating configuration of the first resource; information for power control; and information for dynamic time division duplex (TDD) configuration.

In another embodiment, the method can include receiving second control signaling from the access node with a second resource other than the first resource, wherein both a location and a size of the second resource in the first carrier are fixed, and at least one of the location, the size, and periodicity of the first resource is implicitly determined by the device or determined based on the second control signaling.

In another embodiment, determining, from the first carrier, a first resource for transmitting the first control signaling may include: determining, based on a predetermined size of the first resource and location of the first resource in the first carrier, the first resource; or determining the first resource based on configuration information sent to the device in the further control signaling.

In another embodiment, the first control signaling may include information indicating a control sub-region outside the first resource; wherein the control sub-region is used for receiving configuration signaling from the access node, or used for receiving the configuration signaling or scheduling signaling for data transmission.

In one embodiment, receiving the first control signaling from the access node with the first resource, may comprise: receiving scheduling information of the first control signaling from the access node over a first channel in the first resource; and receiving detailed information of the first control signaling from the access node over a second channel in the first resource; wherein the scheduling information indicates a location of respective control information of the first control signaling in the second channel. In another embodiment, location of the first channel and/or the second channel in the first resource can be predetermined, implicitly determined by the device, or signaled to the device. In another embodiment, receiving the scheduling information of the first control signal from the access node over a first channel in the first resource can comprise: receiving, over a common search space (CSS) in the first channel, common scheduling information for common control signaling in the first control signaling from the access node; and receiving over a UE-specific search space (USS) in the first channel, dedicated scheduling information for UE-specific control signaling in the first control signaling from the access node. In one embodiment, the method also can include receiving information indicating a control sub-region outside the first resource over the first channel or the second channel; wherein the control sub-region is used for receiving configuration signaling from the access node, or used for receiving the configuration signaling or scheduling signaling for data transmission. In another embodiment, the first channel can include a common search space (CSS) for receiving common control signaling from the access node; and the control sub-region can comprise a UE-specific search space (USS) for receiving UE-specific control signaling from the access node.

In some embodiments, a location and/or a size of the USS can be configurable.

In one embodiment, receiving, with the first resource, the first control signaling from the access node can comprise: receiving, with the first resource, first control signaling with a boosted power from the access node.

In another embodiment, the first resource can be continuous resource in the aspect of time and/or frequency.

A third aspect of embodiments of the present disclosure provides an apparatus for transmitting control signaling at an access node of a wireless communication system. The access node operates at a first carrier and the apparatus comprises: a resource determining unit configured to determine, from a first carrier, a first resource for transmitting first control signaling, a bandwidth of the first resource being lower than a total bandwidth of the first carrier; and a first sending unit configured to send the first control signaling to a device with the first resource,; wherein the first control signaling includes at least one of paging control information and system configuration information used by the device after access.

A fourth aspect of embodiments of the present disclosure provides an apparatus for receiving control signaling from an access node at a device of a wireless communication system. The access node operates at a first carrier and the apparatus comprises: a resource determining unit configured to determine, from a first carrier, a first resource for receiving first control signaling, a bandwidth of the first resource being lower than a total bandwidth of the first carrier; and a first receiving unit configured to receive the first control signaling from the access node with the first resource; wherein the first control signaling includes at least one of paging control information and system configuration information used by the device after access.

A fifth aspect of embodiments of the present disclosure provides an apparatus comprising at least one processor; and at least one memory including computer program codes, wherein the at least one memory and the computer program codes are configured to: cause, together with the at least one processor, the apparatus to execute the method according to the first aspect of the present disclosure.

A sixth aspect of embodiments of the present disclosure provides an apparatus comprising at least one processor; and at least one memory including computer program codes, wherein the at least one memory and the computer program codes are configured to: cause, together with the at least one processor, the apparatus to execute the method according to the second aspect of the present disclosure.

A seventh aspect of embodiments of the present disclosure provides an apparatus including processing components adapted to execute the method according to the first aspect of the present disclosure.

An eighth aspect of embodiments of the present disclosure provides an apparatus including processing components adapted to execute the method according to the second aspect of the present disclosure.

A ninth aspect of embodiments of the present disclosure provides a computer program product including computer storage medium, wherein the computer storage medium include instructions, which instructions, when executed in at least one processor, cause the at least one processor to execute the method according to the first aspect of the present disclosure.

A tenth aspect of embodiments of the present disclosure provides a computer program product including computer storage medium, wherein the computer storage medium include instructions, which instructions, when executed in at least one processor, cause the at least one processor to execute the method according to the second aspect of the present disclosure.

Control channels can be enhanced by the method and apparatus disclosed by the embodiments of the present disclosure, so as to improve the performance of the control signaling of the device by, for example, power boosting.

BRIEF DESCRIPTION OF THE DRAWINGS

Through the following detailed description of the embodiments shown with reference to the accompanying drawings, the above and other features of the present disclosure will become more apparent. Same or similar symbols in the drawings of the present disclosure indicate same or similar steps:

Fig. 1 illustrates a schematic diagram of an example wireless communication system where embodiments of the present disclosure can be implemented;

Figs. 2a-2b illustrates flow charts of a method at an access node according to embodiments of the present disclosure;

Fig. 3 illustrates an example layout of a common DL control region in a narrowband resource according to embodiments of the present disclosure;

Fig. 4 illustrates another example layout of a common DL control region in a narrowband first resource according to embodiments of the present disclosure;

Figs. 5a-5b illustrate flowcharts of a method at a terminal device according to embodiments of the present disclosure;

Fig. 6 illustrates a schematic block diagram of an apparatus at an access node according to embodiments of the present disclosure;

Fig. 7 illustrates a schematic block diagram of an apparatus at a terminal device according to embodiments of the present disclosure; and

Fig. 8 illustrates a simplified block diagram of an apparatus suitable for implementing embodiments of the present disclosure.

## DETAILED DESCRIPTION OF EMBODIMENTS

Exemplary aspects of the present disclosure will be described below. More specifically, exemplary aspects of the present disclosure are described below with reference to specific non-limited examples and contents of the currently deemed conceivable embodiments of the present disclosure. Those skilled in the art will understand that the present disclosure is by no means limited to these examples and can be more widely applied.

It will be noted that the following exemplary description mainly relates to a specification utilized by wireless communications systems, which is provided as an example network deployment. To be specific, long-term evolution (LTE), LTE-advanced (LTE-A) and 5G cellular communications system are used as non-limited examples for implementing embodiments of the present disclosure. Besides, the descriptions of the embodiments provided here specifically involve terms directly associated therewith. These terms are used in the context of the presented non-limited examples only and naturally do not limited the present disclosure in any manners. Moreover, although some embodiments of the present disclosure can be implemented in millimeter wave frequency bands, those skilled in the art can understand that embodiments of the present disclosure can be more widely applied. In fact, embodiments of the present disclosure can be applied into any other communications systems, frequency bands, network configurations or system deployments and the like as long as they are compatible with the features described herein.

Various aspects, embodiments and implementations of the present disclosure are described below with several alternatives. It should be noted that all described alternatives can be provided separately or in any conceivable combinations (also including combinations of individual features of various alternatives) in accordance with some requirements and limitations.

In the following detailed description of optional embodiments, reference will be drawn from the drawings constituting a part of the present disclosure. The drawings illustrate, by way of examples, particular embodiments that can implement the present disclosure. Example embodiments are not intended for exhausting all embodiments in accordance with the present disclosure. In addition, it should be explained that although steps of the related method in the present disclosure are described in a particular sequence in the text, it is not necessarily required or suggested that these operations must be executed in accordance with the particular sequence or the desired results can be achieved only by executing all shown operations. Instead, sequence of the steps described in the text can be changed. Additionally or alternatively, some steps can be omitted, and several steps can be combined into one step for execution, and/or one step can be decomposed into several steps for execution.

As described above in the Background, there is unfavorable channel environment existed in some frequency bands of wireless communications systems, e.g., millimeter wave (mmw) frequency bands. In the fourth generation (4G) mobile communications system standard, i.e., LTE and LTE-A, which are developed by the third generation partnership project (3GPP), channel measurement and demodulation of a downlink (DL) control channel is based on a wideband non-precoded cell-specific reference signal (CRS), and the DL control channel itself is also wideband signaling. While for mmw frequency bands, due to the above unfavorable channel characteristics, reusing the control channel design scheme in LTE or LTE-A may not meet the requirements of signal noise ratio (SNR) or signal to interference plus noise ratio (SINR) and coverage in mmw systems. Thus, DL control channel enhancement should be considered for systems (such as 5G mmw systems) having unfavorable channel conditions.

At present, there are following proposals for enhancing control channels:

1) The DL control channel is transmitted by means of beam forming to overcome the strong path loss of the mmw channel. However, these beam-formed DL control channel transmissions mainly enhance signal strength of user equipment (UE) or UE group to which the beam is pointed, and therefore they are more suitable for the UE-specific DL control channels, for example, uplink (UL) grant or DL grant signaling for a particular UE. Before the UE accesses a cell, there lacks any available beam-formed information dedicated for the UE. Therefore, it is difficult for the UE at an access phase to benefit from a beam-formed control channel transmission. For example, primary synchronization channel/secondary synchronization channel (PSS/SSS), physical broadcast channel (PBCH) among other channels cannot use the UE-specific beam-formed transmission. Even if the UE acquires DL synchronization, without UL access, the base station (e.g., eNB) still lacks channel state information (CSI) feedback from the UE or any channel information related to the UE. As such, the base station will not acquire any beam-formed weight for the UE, and thus it is difficult and even impossible to acquire an accurate beam forming for the target UE. Hence, the non-beamformed common control channels are also mandatory for initial system information/random access channel (RACH) resource assignment/paging related signaling. The inventor of the present disclosure therefore believed that the non-beamformed transmission of the common control channels specific to an entire cell is inevitable in the mmw systems.

2) Another proposal is that the cell-specific common control channels, such as system information, paging signal and RACH related DL signaling, are transmitted using the beam-formed transmission without exact channel information, e.g., by predefined beam sectors in a mmw system. However, the beam-formed transmission with coarse beam sector limits receiving within a narrowband region, and may delay or block the receiving of significant DL control channel by UEs in other regions. In such case, to cover all cells, it is needed to deliver the DL control signaling repetitively to the UE, e.g., scanning sectors at cost of a long time delay or transmitting simultaneous in multiple sectors at cost of power loss. Compared with non-beamformed common DL control channel transmission, the beam-formed transmission results in greater time delay or higher signaling overheads or lower power efficiency. Because of these serious defects, robust DL control channels cannot be acquired.

Based on the above analysis, the inventor of the present disclosure believes that the non-beamformed cell-specific DL common control channel transmission is a better option at least for a phase before accessing. However, due to the strong path loss in mmw, different form a wideband DL control channel in LTE/LTE-A, a narrowband DL control region is preferred in mmw. That is, the control channel occupies a bandwidth narrower than an operation bandwidth of the system, so as to boost power by borrowing the power at other frequencies, thereby enhancing the signaling strength.

Therefore, in the embodiments of the present disclosure, there is provided an effective narrowband-based DL control signaling transmission scheme for accurately controlling signaling communications during DL and/or UL synchronization, accessing, paging procedure, or system information updating.

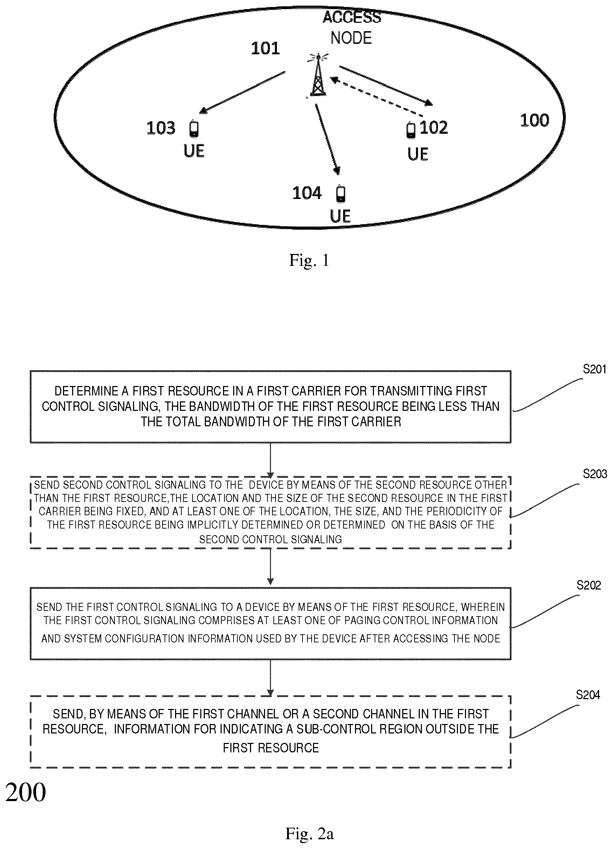

Now refer to Fig. 1. Fig. 1 is a schematic diagram of a wireless communication network 100 where embodiments of the present disclosure can be implemented. For the purpose of explanation only, the wireless communication network 100 is illustrated as a cellular structure. However, those skilled in the art can understand that embodiments of the present disclosure also can be applied to a non-cellular structure, such as a 802.11 network, as long as there is a similar problem of enhancing the performance of control signaling transmission therein. The wireless communication network 100 includes one or more cells controlled by an access node 101. Just as an example, the access node can be an enhanced node B (also known as eNB or eNodeB) defined in 3GPP LTE. The access node also can take the form of base station, node B, base station subsystem (BSS), relay station, remote radio head (RRH) and the like. In the present disclosure, "access node," "base station" and "eNB" can be used interchangeably. The access node 101 provides wireless connections for a plurality of devices 102-104 within its coverage. The term "device" can also be referred to as user equipment (UE), mobile terminal, wireless terminal, mobile station etc., and also includes a mobile phone, a computer with wireless communications capability, a wearable device, a vehicle-mounted equipment, a machine-to-machine communication device and the like. In the present disclosure, a "device" which communicates with the access node can be used interchangeably with "UE".

The base station 101 shown in Fig. 1 can communicate, for example via millimeter wave frequency band, with the devices 102-104. In this scenario, compared with transmissions in a 4G authorized frequency band, the performance of transmissions of data and control signaling will under degradation due to the unfavorable propagation characteristics of the millimeter wave frequency bands. The performance degradation of data transmission can be compensated by using a narrowband beam forming technology dedicated for a particular device whereas it is hard for at least some control channels (e.g., common control channels broadcasting to a plurality of devices) to benefit from the narrowband beam forming.

In the embodiments of the present disclosure, there is provided a method, an apparatus and a computer program product, which improves performance of control channels when the narrowband beam forming is unavailable.

Several example embodiments of the present disclosure are introduced below with reference to the drawings.

Next refer to Figs. 2a-2b, which illustrate flow charts of an example method 200 for transmitting control signaling at an access node of the wireless communications system in accordance with embodiments of the present disclosure. The access node operates at a first carrier. The wireless communications system, for example, may be (but not limited to) the system 100 in Fig. 1 and the access node may be (but not limited to) the base station 101 in Fig. 1. In some embodiments, the first carrier can be a carrier of a millimeter wave frequency band, but embodiments of the present disclosure are not limited to this.

As shown in Fig. 2a, the method 200 includes: at block S201, determining from a first carrier a first resource for transmitting first control signaling, a bandwidth of the first resource being lower than a total bandwidth of the first carrier; i.e., the first resource is a narrowband resource in the first carrier; at S202, a base station sends the first control signaling to a device with the first resource; wherein the first control signaling includes at least one of paging control information and system configuration information used by the device after access.

The paging control information may include configuration information used by the device for receiving paging and/or responding to the paging. For example, the paging control information may include, but not limited to, paging configuration and/or paging cycle etc.

The system configuration information may include common configuration information utilized by all UEs or a group of UEs in the system and the configuration information may involve, for example, parameters for receiving/sending data and/or reference signal and/or control information ect. In one embodiment, the system configuration information may comprise at least a part of information in system information block (SIB) defined in the 3GPP LTE standard. In another embodiment, the system configuration information may alternatively or additionally include information for updating configuration of the first resource, power control information (such as uplink power control) and/or dynamic time division duplex (TDD) configuration etc. Just as an example, the information for updating configuration of the first resource may include update configuration for a location and/or a size of the first resource, and/or update configuration for one or more channels in the first resource (such as a location and/or size). However, the embodiments of the present disclosure are not limited to the listed configuration examples. Instead, any configuration information related to the first resource may be included.

Both paging control information and system configuration information are common control information which can be used by a plurality of UEs. As described above, the common control information for a plurality of users can hardly benefit from beam forming. However, the method 200 of the embodiments of the present disclosure can improve the performance of control signaling by performing power boosting on a narrow frequency band.

Compared with the maximum bandwidth 100MHz of a LTE-LTE-A system, the total bandwidth in mmv can reach 500MHz, lGMHz or get even bigger. As such, in one embodiment, the width of a narrowband channel (i.e., the first resource) determined in S201 can be far greater than 6 physical resource blocks (PRB) for transmitting main information block (MIB) in a LTE. For example, the first resource may have a bandwidth of 10MHz or 20MHz. In another embodiment, the first resource may be continuous resource in an aspect of time and/or frequency, so as to simplify the RS layout on the first resource. However, the embodiments of the present disclosure are not limited to this.

In one embodiment, an operation of block S201 may include: determining, based on a predetermined size of the first resource and location of the first resource in the first carrier, the first resource (such as the location and size); or determining the first resource based on configuration information sent to a device in another control signaling; or determining the first resource in a combination of predefined and signaling manner. For example, an initial location and size of the first resource may be preconfigured. A terminal device can search needed control signaling at the preconfigured initial location during an initial access. Afterwards, the base station may update, increase or reduce, by signaling (e.g., physical layer signaling or high-level signaling), the first resource as needed and the update, increase and reduction may include changes of location and/or size of the first resource. In one embodiment, the signaling may indicate an update configuration of the first resource at current time (e.g., a current frame or sub-frame). In another embodiment, the signaling may indicate the update configuration of the first resource at subsequent time. For example, the location and size of the first resource effective at the k-th sub-frame can be indicated at the $(k-L)^{th}$ sub-frame. In some embodiments, the configuration signaling for the update of the first resource can be sent at the current location (e.g., the initial location) of the first resource via the common control signaling. In some other embodiments, the configuration signaling may be sent at other locations apart from the existing first resource. In one example, the configuration signaling may be included in the first control signaling sent at the current time or previous time (e.g., a current sub-frame or a previous sub-frame). In another embodiment, determining the first resource may also include determining periodicity of the first resource.

In another embodiment, the first control signaling sent by the base station in S202 also can include broadcast control information to enable the device to perform the access procedure. Just as an example, the broadcast control information may include, for example, information sent in a physical broadcast channel (PBCH) of a LTE or LTE-A system. In another example, the broadcast control information may include, but not limited to, one or more of system bandwidth, frame number, CRS configuration, frame format and the like. In another embodiment, the broadcast control information may also include information for system synchronization, e.g., PSS/SSS or parts of the contents thereof in the LTE. In some embodiments, alternatively or additionally, the first control signaling sent by the base station in S202 may also comprise random access control information, for example but not limited to, random access preamble group information, random access preamble format and RACH resources for sending the random access preamble etc. In one embodiment, the first control signaling may include all system information which is compulsive at least at the access phase.

In one embodiment, the first control signaling is provided by joint design and joint resource allocation. That is, all information in the first control signaling is jointly sent in the narrowband first resource of the joint allocation. For example, the first control signaling may comprise a plurality of control fields; the sequence of the plurality of control fields and a type and size of control information indicated by each control field are predefined. As such, the UE can be aware of the contents of each monitored control field at the initial access. In one example, the transmission format of the first control signaling may be similar to the information layout format in the PBCH of LTE.

Alternatively, the first control signaling may include a plurality of control information elements and each of the plurality of control information elements may be of the format of downlink control information (DCI) in physical downlink control channel (PDCCH) defined in the 3GPP LTE standard, such that the first resource becomes a common control region having a structure similar to the PDCCH.

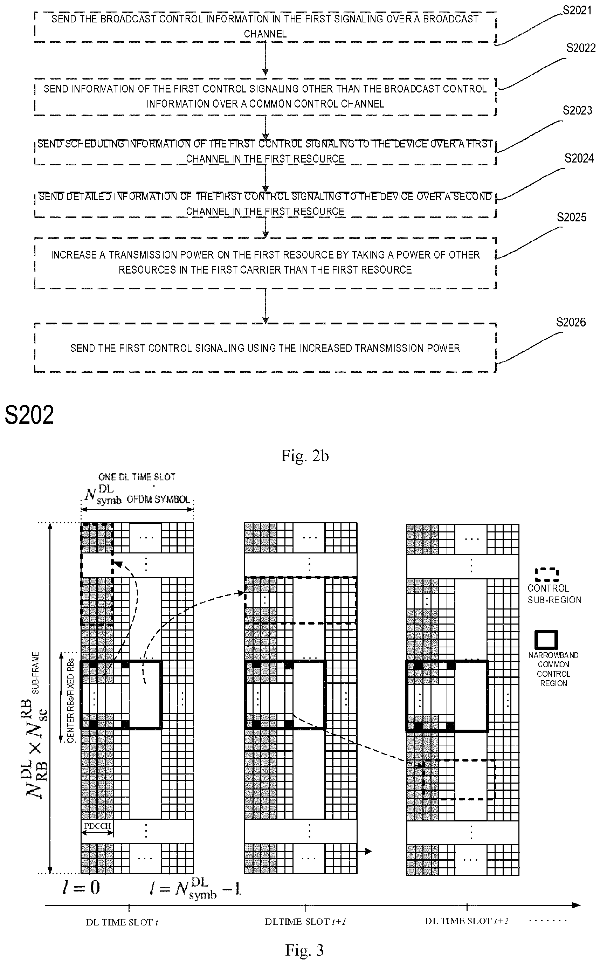

As shown in Fig. 2b, in another embodiment, the operation of block S202 may include: at block S2021, the base station sends the broadcast control information in the first signaling over the broadcast channel, and the base station sends other information of the first control signaling other than the broadcast control information over a common control channel, at block S2022. That is, the information in the first control signaling is sent via two different channels in the narrowband first resource, such that separate layout format may be adopted for different information. In one embodiment, the broadcast channel and the common control channel occupy adjacent resource regions in the first resource. Adjacency means being adjacent in the aspect of time and/or frequency. For example, the broadcast channel and the common control channel occupy adjacent orthogonal frequency division multiplexing (OFDM) symbols. The adjacent resource simplifies scheduling and mapping of reference signal (RS) and keeps backward compatibility with the LTE. However, those skilled in the art can understand that embodiments of the present disclosure are not limited to such kind of adjacent resource allocation.

Additionally or alternatively, as shown in Fig. 2a, in another embodiment, the method 200 may include a block S203, in which the base station sends second control signaling to the device with a second resource other than the first resource, wherein both a location and a size of the second resource in the first carrier can be fixed while at least one of the location, the size, and periodicity of the first resource can be implicitly determined or determined based on another signaling (e.g., the second control signaling). For example, the narrowband non-beamformed first control signaling can be separated, from other common control channels (such as PBCH) according to this embodiment. The amount of information (that is, second control signaling) in the other common channels may be fixed, such that the size and location can be predefined and known to the UE before access. However, the design of the first control signaling may be more flexible. For example, at least one of resource size, location, time interval and the like may be varied and obtained based on implicit signaling (e.g., physical cell identifier (PCID)); or at least a part of the configuration of the first control signaling may be indicated by explicit signaling (e.g., signaling in PBCH) for inter-cell interference coordination and robust transmission of signaling.

In some embodiments, considering that the capacity of the narrowband first resource is limited and may be insufficient to transmit all common control signaling, other DL control signal sub-regions may be further configured. For example, the first control signaling sent in S202 also may include information indicating the control sub-region outside the first resource; where the control sub-region is used for sending configuration signaling to the device, or used for sending the configuration signaling or scheduling signaling for data transmission. Accordingly, the configuration information, which cannot be sent in the first resource due to capacity limitation, can be directly sent in the control sub-region or the place for sending the configuration information is indicated via the scheduling information in the control sub-region. As such, the sending of control signaling is more flexible. In one embodiment, the first control signaling sent in S202 may indicate the control sub-region at current time (e.g., a current frame or sub-frame). In another embodiment, the first control signaling may indicate a control sub-region at subsequent time (e.g., after several sub-frames).

As shown in Fig. 2b, in one embodiment, the operation in S202 may include: sending scheduling information of the first control signaling to the device over a first channel in the first resource, at block S2023, and sending detailed information of the first control signaling to the device over a second channel in the first resource at block S2024, wherein the scheduling information indicates the location of respective control information of the first control signaling in the second channel. For example, the first channel may be common downlink control channel (hereinafter referred to as a common PDCCH or common PDCCH region), and the second channel may be a common downlink shared data channel (hereinafter referred to as common PDSCH or a common PDSCH region). In this embodiment, the above two channels may be used to respectively transmit the scheduling information of the common control signal and the detailed common control signal.

Optionally, the second channel (e.g., common PDSCH) may be assigned close to the first channel (e.g., common PDCCH) in the first resource, so as to simplify the CRS design for the two channels. It is certain that those skilled in the art should understand that the embodiments of the present disclosure do not exclude separate resource assignment for the two channels.

In one embodiment, the location and/or the size (or corresponding resource) of the first channel or the second channel or both are predetermined in the first resource, e.g., defined in a related communications standard. In another embodiment, the location/size/corresponding resource of at least one of the first channel and the second channel may be implicitly determined by the device, or may be transmitted to the device via signaling. In another embodiment, the location and/or size of the first channel and/or the second channel may be determined in a manner of a combination of preconfiguring and signaling notification. For example, an initial location and size of the first channel and/or the second channel may be preconfigured. Afterwards, the base station can alter, via signaling (e.g., physical layer signaling or high-level signaling), the location and/or size of the first channel and/or the second channel according to needs. In one embodiment, the signaling may indicate the update configuration of the first channel and/or the second channel at current time (e.g., a current frame or sub-frame). In another embodiment, the signaling may indicate an update configuration of the first channel and/or the second channel at subsequent time, for example, indicating, at the $(k-L)^{th}$ sub-frame (such as via high-level signaling, or the first channel or the second channel), the location and size of the first channel and/or the second channel effective at the k-th sub-frame. In some embodiments, the configuration signaling for updating of the first channel and/or the second channel may be sent via the common control signaling at a current location (e.g., an initial location) of the first channel and/or the second channel. For example, the configurations of the first channel and/or the second channel to be adopted can be indicated in an existing first channel. In some other embodiments, the configuration signaling can be sent in a location/channel except the existing first channel and/or second channel.

Alternatively or additionally, in another embodiment, sending, via a first channel in the first resource, scheduling information of the first control signaling to the device at block S2023 can include: sending, over a common search space (CSS) in the first channel (e.g., common PDCCH), the common scheduling information for the common control signaling in the first control signaling to the device and sending over a UE-specific search space (USS) in the first channel the dedicated scheduling information for device-specific control signaling in the first control signaling to the device.

In one embodiment, the CSS takes a large portion of space in the first channel while the rest small portion of the space in the first channel is occupied by the USS. In another embodiment, a location and/or a size of the USS may be configurable.

In another embodiment, in time domain, resources occupied by the first channel (e.g., a common downlink control channel) may be configured per sub-frame, or updated according to a certain cycle, or reconfigured via a system information update. The configuration is signaled to the device as broadcast information. In one embodiment, the broadcast information may be sent in the currently effective first channel or second channel. In addition, the configuration may fail in the same sub-frame which sends the broadcast information, or become effective after several sub-frames. In another embodiment, the first channel may also be preconfigured before access.

In some embodiments, as shown in Fig. 2a, the method 200 also may optionally include: sending information indicating the control sub-region outside the first resource over the first channel or the second channel at block S204; wherein the control sub-region is used for sending configuration signaling to the device, or used for sending scheduling signaling of the configuration signaling, or used for sending scheduling signaling for other data transmissions. Considering that the capacity provided by the narrowband first resource region may be insufficient, an additional DL control channel sub-region may be configured to deliver more control signaling, such as UE-specific DL control signaling. In one embodiment, the control sub-region configuration at the current time (e.g., the current frame or sub-frame) may be indicated via the first channel or the second channel. In another embodiment, the control sub-region configuration at subsequent time can be indicated via the first channel or the second channel. For example, the control sub-region effective at the k-th sub-frame may be indicated in the second channel of the $(k-L)^{th}$ sub-frame or in the first channel of the k-th sub-frame. The configuration information for the control sub-region sent in the first channel or the second channel may be included in the control signaling at physical layer or signaling at a high layer.

For a particular UE, if it is notified of a control sub-region for its DL control signaling (e.g., DL/UL grant), it may directly search expected signaling in the control sub-region; otherwise, the particular UE, for example, may firstly search USS in narrowband first resource.

In another embodiment, the USS may be located in the control sub-region. For example, the first channel in the first resource may include CSS which sends the common control signaling to the device whereas the control sub-region comprises USS which sends device-specific control signaling to the device.

In one embodiment, as shown in Fig. 2b, the sending in block 202 may include increasing the transmission power on the first resource by taking a power of other resource units in the first carrier other than the first resource at block S2025, and sending the first control signaling using the increased transmission power at block S2026. However, as understood by those skilled in the art, although the method 200 of the embodiments of the present disclosure enables power boosting, it is optional that the sending is performed with the power boosting and whether the power boosting is adopted depends on factors, such as channel condition, SNR requirements and the like.

Various embodiments of the method 200 are provided above. These embodiments and their combinations can at least implement, but not limited to, the following technical solutions for sending the control signaling.

Solution 1:

As described above, at the synchronization and initial access phase, a non-beamformed common cell-specific control channel, such as a PSS/SSS, a PBCH and the like, may be mandatory for a mmw system. As such, a combined control channel may be sent in the narrowband first resource, where the combined control channel may include, for example, a PBCH and a common control channel, or even a PSS/SSS, or at least partial content therein.

Compared with having the maximum bandwidth of 100MHz for a LTE/LTE-A system, the total bandwidth for mmv can reach 500MHz, 1GMHz or get even bigger. Therefore, the width of a narrowband channel (i.e., a first resource) can be far greater than 6 PRBs for transmitting main information block (MIB) in the LTE. For example, the narrowband shared channel may be 10MHz or 20MHz.

If the bandwidth of the first resource still cannot satisfy the requirements of a combined control region, some system information, which will be used after access, may be notified via a dedicated signaling mode, so as to unload from the combined control region.

By a way of prefiguration or signaling or a combined manner thereof, the location and the size of the combined control channel (or known as a combined control region) are clear to all UEs. By combined transmitting a plurality of control messages/signaling/channels in the first resource, the design of the common control channel design and the mapping of RS are simplified in this scheme. ; meanwhile, a flexible configuration of the PBCH and DL control channel can be realized based on, for example, at least one of different cycles, sizes, locations and the like.

In the combined control region, the following different types of specific layouts for example may be used.

Type 1: all needed system information to be transmitted, and the compulsive system information at least during access phase are provided with a joint design and a joint resource allocation, including the type of each system information, load size of respective type and sequence thereof, which may be preconfigured. As such, a UE can detect signaling at an initial access and understand the meaning of each item of information.

Type 2: in mmw, since we may only consider the DL common control channel known to each UE in the narrowband region, the decoding of the DL common control channel may no longer rely on the total DL bandwidth of the system and the structure of physical hybrid automatic repeat-request indicator channel (PHICH) like in LTE. Therefore, in type 2, key system information may also be sent in the narrowband first resource via a format similar to a physical downlink control channel (PDCCH) in the LTE, that is, the combined control channel in the first resource may keep the structure of the PDCCH. For example, the system information may be broadcasted by a common DL control channel with a SI-RNTI identifier.

Type 3: in a combined control region, the broadcast channel and the common control channel are transmitted in combination using a joint resource allocation. For example, in an implementation of such type, a PBCH and a PDCCH may be separately sent, but both of them are located in the narrowband first resource, so as to simplify scheduling and RS mapping and keep backward compatibility with the LTE.

Scheme 2:

Apart from the combined control channel in the first resource, there may be other independent common channel, such as a PBCH, existed in the scheme. That is, there is other common channel in addition to the first resource. In this case, the narrowband non-beamformed DL control channel is separated from other independent common channel. The amount of information of the other common channel can be basically fixed, so that the size and location thereof may be preconfigured and known prior to a UE access. The design of the common control channel in the first resource may be more flexible. The transmission size/location and time interval thereof may be varied, for example, based on implicit signaling (such as a PCID) or indicated via explicit signaling (such as other common channel independently existed, e.g., a PBCH) for inter-cell interference coordination and robust transmission.

Examples of layout of the combined common control channel provided below are applicable regardless of whether the Scheme 1 or Scheme 2 is used for deploying the combined common control channel in the first resource .

In an example embodiment, the common DL control region in the narrowband (i.e., first resource) may include a common DL control channel (PDCCH) region and a common DL shared data channel (PDSCH) region, which are respectively responsible for transmitting scheduling information of the common control signal and a detailed common control signal. The common PDSCH region may be selected to be assigned near the common PDCCH region for transmission of detailed system signaling, so as to simplify the cell-specific RS design for the two common channels. It is certain that separate resource assignment for the two common channels is not excluded.

In another embodiment, the common PDCCH channel in the narrowband region (that is the first resource) may include common search space (CSS) and UE search space (USS). The CSS is configured for transmission of common system information while the USS may be configurable and may transmit information in the common PDCCH region except for the CSS. The USS may be responsible for behaviors of a particular UE in case no other DL control sub-regions are available for e.g., scheduling grant.

In another embodiment, considering that the capacity provided by the narrowband common DL control region may be insufficient, other DL control channel sub-region (hereinafter may be interchangeably referred to as control sub-region, control channel sub-region, sub-region or control sub-channel) may be configured to deliver more control signaling, such as UE-specific DL control signaling. For a particular UE, if it is clearly notified of the control sub-channel configuration for its DL control signaling (e.g., DL/UL grant), it can directly search expected signaling in the control sub-region; otherwise, and the particular UE can firstly search the USS in the PDCCH region of the narrowband. As described above, in one embodiment, the control sub-region configuration at current time (e.g., a current frame or sub-frame) may be notified via the first channel or the second channel. In another embodiment, the control sub-region configuration of the UE at subsequent time may be notified via the first channel or the second channel. For example, the UE is notified of the control sub-region effective at the k-th sub-frame in the second channel of the $(k-L)^{th}$ sub-frame or in the first channel of the k-th sub-frame. The configuration information for the control sub-region sent in the first channel or the second channel may be included in a physical layer control signaling or high-level signaling.

Based on one or more of the above schemes, the strong pass loss signal in mmw system, for example, can be alleviated, so that quality of control signaling transmitted during UE DL/UL synchronization and/or access and/or paging phase can be guaranteed.

Fig. 3 illustrates an example layout of the common DL control region in the narrowband resource in accordance with embodiments of the present disclosure. In this example, all key control signaling is sent in the common control channel of the narrowband resource. The narrowband resource may be the first resource described with reference to Figs. 2a-2b and the method 200. In this example, it is assumed that the total bandwidth of the working carrier (e.g., the first carrier described with reference to Figs. 2a-2b) of the system includes $N_{RB}^{DL}$ resource blocks (RB) and each RB comprises $N_{SC}^{RB}$ sub-carriers, that is, the total bandwidth includes $N_{RB}^{DL} * N_{SC}^{RB}$ sub-carriers. As shown in Fig. 3, the narrowband resource for the common control signaling (e.g., the first control signaling described with reference to method 200) may be located in several RBs at the center of the carrier. However, it should be noted that this is only an example and the narrowband region may also be located at other places in other embodiments. The location may be fixed, preconfigured, or additionally signaled. In the common DL control region, different control information may be transmitted according to different schemes (such as the above Scheme 1 and Scheme 2). For example, the control information being transmitted may include contents of MIB in the LTE system, and/or common control signaling in a PDCCH, and/or contents of some SIBs, such as control information for paging and/or random access. As shown in Fig. 3, the first control signaling in the narrowband control region may indicate another control sub-region, shown in the figure as a PDCCH sub-region. The indicated control sub-region may be located at a current sub-frame or subsequent sub-frames. Moreover, the transmission format of the control information may also be varied correspondingly according to different schemes or designs (e.g., the above types 1 to 3) in the narrowband region. Fig. 3 also illustrates traditional PDCCH resource as a comparison to the narrowband control region, in which traditional PDCCH resource is distributed over an entire bandwidth and occupies the first 4 OFDM symbols of the first time slot of each sub-frame.

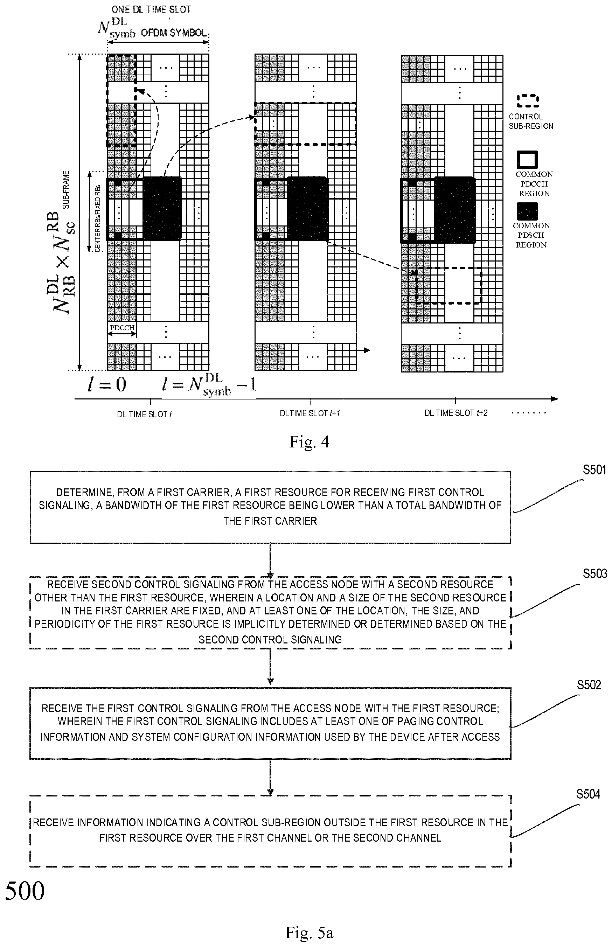

Fig. 4 illustrates another example layout of the common DL control region in the narrowband first resource in accordance with embodiments of the present disclosure. Depending on different schemes, the other common DL control channel (such as a PBCH) may exist or not in addition to the first resource. Despite that the other common DL control channel exists or not, the common DL control region in the narrowband first resource exists independently in this example. As shown in Fig. 4, the common DL control region may include two parts: one is a common DL control channel region (a common PDCCH region being illustrated in the drawing) including mandatory common search space (CSS) occupying a majority of resources and configurable UE search space (USS), and the other is a common DL shared data channel region (a common PDSCH region being illustrated in the drawing).

In time domain, the common DL control region in the narrowband first resource may be configured per sub-frame, or may be reconfigured via SI which is sent and updated based on a specific cycle. This configuration may be signaled via broadcast information, or may be preconfigured before access.

In the example, the sending of the control information in the common DL control region may be non-beamformed. One of the advantages of reducing the common DL control region to the narrowband is boosting the transmission power of the control signaling within the narrowband by borrowing power of resource units (RE) at other frequency bands within the symbol, so as to increase signal to interference plus noise ratio (SINR). However, the signal strength of the RE at other frequency bands in the same symbol except the common DL control region may be enhanced via the beam-formed transmission.

In some embodiments, the narrowband first resource may be initially placed at a fixed or predetermined location of a system bandwidth, e.g., center, such that all UEs can detect the common control signaling after DL synchronization. In some other embodiments, considering coordination of inter-cell interference of the common DL control region, the location of the region may be adjusted, such that the DL control signaling therein becomes more robust. One example is the location of the common DL control region in different cells may be shifted in accordance with physical cell ID (PCID), so as not to overlap with the common DL control region of other cells. In another embodiment, as described with reference to the method 200, the location and/or size of the first resource is updated by means of the control signaling.

Similar to the example of Fig. 3, apart from the common DL control channel, other DL control channel sub-region may also be assigned in the example of Fig. 4 to transmit UE-specific control information having flexible resource allocation, such as UE-specific scheduling grant, so as to compensate insufficient capacity in the common DL control region. One of the merits for offloading the system information via the DL control channel sub-region is to further save the resources allocated to the narrowband DL common region. The location information of the DL control channel sub-region may be signaled in the common PDCCH region or a previous common PDSCH region. For example, the location information of the DL control channel sub-region may be indicated via the DL control channel of the CSS of the common PDCCH in a current sub-frame or a previous sub-frame; or the location information of the DL control channel sub-region may be indicated via the PDSCH/PDCCH in previously scheduled data/grant of the UE; or the location information of the DL control channel sub-region may be indicated via high-level signaling. In case the location information of the DL control channel sub-region is carried in a DL control channel in the CSS of the common PDCCH region, a new RNTI for different UE groups may be predetermined to signal a single UE to search the information.

When the location information of the DL control channel sub-region is absent, missing or incorrect for the UE, the UE may search the USS in the common PDCCH region with respect to dedicated control/data transmission. For an initial transmission of the UE, assigning the grant in the USS of the common PDCCH region also can simplify scheduling.

In the example, the size and location (such as an initial size and location) of the CSS and the USS in the common PDCCH region may be predefined, or may be indicated by other broadcast signal if they are other broadcasting signal, such that the UE knows how to search the CSS and the USS (e.g., using different RNTIs). The USS in the common PDCCH region may be configured to support UE-specific behaviors in case no other DL control channel sub-regions are available for such as scheduling grant. In one embodiment, the size and/or location of the CSS and the USS after several sub-frames may be specified in previous CSS or USS. In another embodiment, the size and/or location of the USS of the same sub-frame may also be specified in current CSS or USS. The above described configuration manners with respect to the first resource, the first channel and the second channel may also be applied to the configuration of CSS and/or USS. For example, in one embodiment, the update configuration of the CSS/USS effective at current time or after some time may be notified via a particular channel (e.g., the first channel or second channel or broadcast channel) in the first resource or other channels except the first resource. The signaling for the update configuration may include physical layer control signaling or high-level signaling.

In the example of Fig. 4, a system information block (SIB) may be transmitted in the CSS of the common PDCCH region. In another example, the scheduling information of the system information block may also be sent via the CSS in the common PDCCH region and detailed SIB is transmitted in the common PDSCH region which is also located in the narrowband first resource. In this case, a system information block (SIB) of the common PDSCH region may be indicated by the transmission of the corresponding DL control channel having SI-RNTI in the CSS. The type of SIB, distribution of SIB in time domain or different cycles of SIB may be preconfigured or signaled via other existing SIB.

In one example, a random access configuration may be transmitted via the SIB, such that the UE can execute a RACH procedure based on a clear indication to complete UL synchronization. The random access configuration may include, but not limited to, at least one of preamble group information, a preamble format and RACH resources assigned for UL preamble sending.

Alternatively or additionally, in another example, a paging cycle and paging configuration may be signaled via a SIB, such that the UE can obtain, based on e.g., UE-ID and deduction, when to wake up to receive a paging signal. For example, the SIB configures in which sub-frame a terminal should wake up and listen for paging. In which frame a given terminal should wake up and search for the P-RNTI in a DL control channel is determined by a function, which function takes terminal identity and cell-specific or terminal-specific paging cycle as inputs. Since the terminal in an idle mode has not been allocated with a C-RNTI, the identity used herein may be IMSI coupled to a subscriber.

Since the common PDCCH carries the common control signaling for all UEs and the common control signaling therein may not be transmitted via beam forming, the reference signal (RS) in this region may also be cell-specific and non-beamformed. In order to increase SINR and coverage of the common PDCCH, an high-level aggregation and power boosting may be considered to guarantee the performance of transmission of the common PDCCH. However, as understood by those skilled in the art, the embodiments of the present disclosure do not exclude the transmission of RS with cell-specific beam forming. For example, the transmission of RS may be broadcasted by performing spatial division multiplexing with the common PDCCH.

For other DL control channel sub-region, strong path loss in mmw can be overcome using beam forming. Therefore, RS also may be beam formed in the DL control channel sub-region.

During an initial access phase and idle mode period for a certain UE, all DL control information acquired from the common DL control region is compulsive, where the RS is cell-specific. In a RRC connected mode, it may also be required that the SIB and the paging information are received, for example, at SIB update or paging for SIB update indications. During the RRC connected mode, because CSI or feedback is available, the UE-specific beam formed transmission is also an option to support dedicated DL control signaling transmission to fight against mmw path loss.

As shown in Fig. 4, the other part in the common DL control region of the first resource is a common PDSCH. As described above, scheduling information and paging information of the SIB may be carried via a DL control channel scrambled with a SI-RNTI and P-RNTI (e.g., a control channel in CSS of the common PDCCH) whereas the corresponding detailed signaling may be transmitted in the common PDSCH. Since the content sent in the common PDSCH is the common information for all UEs, the PDSCH is also placed in the common narrowband first resource, which is different from the PDSCH in the traditional LTE.

As described for the common PDCCH, the transmission of the common signaling is dedicated for all UEs. Therefore, the common PDSCH should also be non-beamformed and the RS therein also may be cell-specific and non-beamformed.

The common PDSCH in Fig. 4 may be assigned via one of the following schemes:

Scheme A: the location and size of the common PDSCH may be preconfigured or configurable, e.g., configured in the common PDCCH. To simplify the mapping of RS in the common PDCCH or the common PDSCH, the common PDCCH and the common PDSCH may be jointly assigned, for example, specifying adjacent resources of the same frequency band for the common PDCCH and the common PDSCH in each sub-frame. However, those skilled in the art could understand that the embodiments of the present disclosure do not exclude assigning resource separately for the common PDCCH and the common PDSCH.

Scheme B: a dynamic assignment is performed via, for example, DCI in the common PDCCH. This scheme provides much more flexibility in terms of resource allocation, where the design and mapping of the RS may be identical to that in the common PDCCH.

Figs. 5a-5b illustrates flow charts of a method 500 executed at a device (such as UE102 in Fig. 1) of a wireless communication system for receiving control signaling from an access node (e.g., eNB101 in Fig. 1). The access node operates at a first carrier and the method includes: at block S501, determining, from the first carrier, a first resource for receiving a first signaling, a bandwidth of the first resource being lower than a total bandwidth of the first carrier; at block S502, receiving the first control signaling from the access node with the first resource; wherein the first control signaling includes at least one of paging control information and system configuration information used by the device after access.

In one embodiment, the access node implements the method described with reference to Figs. 2a-2b. Therefore, the first control signaling may be identical to the first signaling described with reference to Figs. 2a and 2b and the method 200. For example, the system configuration information in the first control signaling may include at least a part of information in a system information block SIB defined in the third generation partnership project 3GPP long-term evolution LTE standard. In some embodiments, the system configuration information may comprise at least a part of information in a system information block SIB defined in the 3GPP LTE standard. In another embodiment, the system configuration information may alternatively or additionally include information for update configuration of the first resource, power control information (such as uplink power control) and/or dynamic time division duplex (TDD) configuration etc. The specific details will not be repeated. Similarly, the first resource also may be the same as the description with reference to the method 200 and Figs. 2a-4 and will also not be repeated here. For example, the first resource may be continuous resource in the aspect of time and/or frequency.

In one embodiment, the first control signaling also includes broadcast control information which enables a device to execute an access procedure.

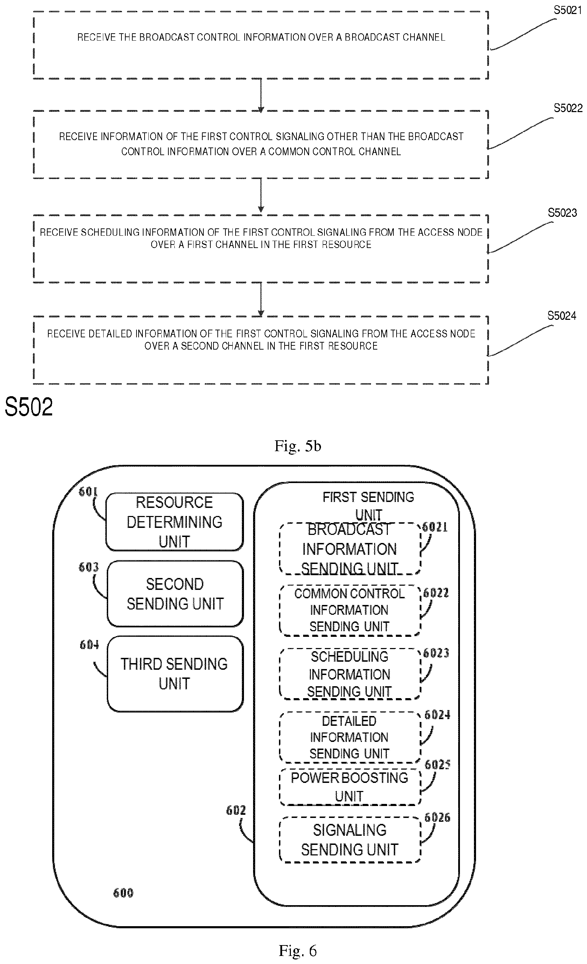

As shown in Fig. 5b, in another embodiment, the operation of block S502 may include receiving the broadcast control information over a broadcast channel at block S5021, and receiving information of the first control signaling other than the broadcast control information over the common control channel at block S5022. In one embodiment, the broadcast channel and the common control channel may occupy adjacent resource regions in the first resource.

The first control signaling received in block S502 may have different formats. In one embodiment, the first control signaling may include a plurality of control fields and sequence of the plurality of control fields and type and size of control information indicated by each control field are preconfigured. For example, the information format similar to the one in PBCH of LTE may be adopted. In another embodiment, the first control signaling may have a structure similar to the PDCCH in LTE, that is, the first control signaling may include a plurality of control information elements and each of the plurality of control information elements may have the format of DCI in PDCCH defined in the 3GPP LTE standard.

In another embodiment, the method 500 also may include the block S503, where the device may receive second control signaling from the access node with a second resource other than the first resource, wherein both a location and a size of the second resource are fixed in the first carrier and at least one of the location, the size, and periodicity of the first resource can be implicitly determined by the device or determined based on the second control signaling. The second control signaling may be, for example, MIB information.

Optionally, in block S501, the device may determine the first resource based on the predetermined size of the first resource and the location of the first resource in the first carrier; or determine the first resource based on the configuration information in another control signaling (e.g., PBCH) from the access node. In another embodiment, the device may perform the determination using the same determination manner in the method 200. The above determination method described with reference to the method 200 is also applicable and the details will not be repeated again. For example, the determination may be performed in accordance with a combined predetermined and signaled manner. This another control signaling may be sent before or in the initial first resource at the current time.

In order to expand the control region, in one embodiment, the first control signaling also includes information indicating the control sub-region apart from the first resource; where the control sub-region is used for receiving configuration signaling from the access node, or for receiving the scheduling signaling of the data transmission or the configuration signaling. In one embodiment, the control sub-region and its configuration manner are identical to the description in the method 200. Therefore, the related description given in combination with the method 200 is also applicable here and will not be repeated.

In another embodiment, the first control signaling is the same as the first control signaling sent at block S202 in the method 200. Therefore, the related description provided in combination with the method 200 is also applicable here and will not be repeated.

As shown in Fig. 5b, in one embodiment, the operation in the block S502 may include: receiving scheduling information of the first control signaling from the access node over a first channel in the first resource at the block S5023, and receiving detailed information of the first control signaling from the access node over a second channel in the first resource, at S5024, wherein the scheduling information indicates a location of respective control information of the first control signaling in the second channel. In another embodiment, the location of the first channel and/or the second channel in the first resource is predetermined, can be implicitly determined by the device or indicated by the access node via signaling. In another embodiment, the operation of the block S5021 can include receiving, over a common search space (CSS) in the first channel, the common scheduling information for the common control signaling in the first control signaling from the access node; and receiving, over a UE-specific search space (USS) in the first channel, dedicated scheduling information for device-specific control signaling in the first control signaling from the access node.

In another embodiment, the method 500 may include receiving information indicating the control sub-region outside the first resource over the first channel or the second channel at block S504; wherein the control sub-region is used for receiving configuration signaling from the access node, or used for receiving the configuration signaling or scheduling signaling for data transmission. In another embodiment, the first channel includes receiving from the access node a common search space (CSS) of the common control signaling; and the control sub-region comprises a receiving, from the access node, UE-specific search space (USS) of the device-specific control signaling.

In some embodiments, the first channel and the second channel and their configuration manner are identical to the respective description in the method 200 and thus will not be repeated here.

As described in combination with the method 200, in some embodiments, the location and/or size of the USS are configurable.

In one embodiment, the first control signaling, which is received from the access node via the first resource in S502, is power increased control signaling.

An apparatus for transmitting control signaling at an access node of a wireless communications system is described below with reference to Fig. 6. The wireless communications system, for example, may be the system 100 in Fig. 1, which may be a 5G system. However, the embodiments of the present disclosure are not limited to this. The access node may be, for example, the eNB101 in Fig. 1 and operates at the first carrier. The first carrier may be placed at, but not limited to, a millimeter wave frequency band.

The apparatus 600 can be used for, but not limited to, executing the method 200 described with reference to Figs. 2a-2b; the method 200, which is also described with reference to Figs. 2a-2b, can be implemented by (but not limited to) the apparatus 600. For example, one or more operations of the method 200 may be executed by other apparatuses.

As shown in Fig. 6, the apparatus 600 includes: a resource determining unit 601 configured to determine, from a first carrier, a first resource for transmitting first control signaling, a bandwidth of the first resource being lower than a total bandwidth of the first carrier; a first sending unit 602 configured to send the first control signaling to a device with the first resource; wherein the first control signaling includes at least one of paging control information and system configuration information used by the device after access.

In one embodiment, the apparatus 600 may be configured to execute the method 200 described with reference to Figs. 2a-4. Therefore, the resource determining unit 601 and the first sending unit 602 may be respectively configured to execute the operations in blocks S201 and S202 of the method 200. Accordingly, description with respect to the method 200, especially to the blocks S201 and S202, also can be applicable here. Similarly, the description regarding the first resource and the first control signaling also can be applied here.

In one embodiment, the first resource may be continuous resource in the aspect of time and/or frequency.

In one embodiment, the first control signaling also can include broadcast control information to enable the device to perform an access procedure. Optionally, in one embodiment, the first sending unit 602 can include: a broadcast information sending unit 6021 configured to send the broadcast control information over a broadcast channel, and a common control information sending unit 6022 configured to send contents in the first control signaling other than the broadcast control information over a common control channel. In another embodiment, the broadcast channel and the common control channel can occupy adjacent resource regions in the first resource. However, those skilled in the art can understand that separate resource allocation for the broadcast channel and the common control channel is not excluded.

In another embodiment, the apparatus 600 also can include a second sending unit 603 configured to send second control signaling to a device with a second resource other than a first resource, wherein both a location and a size of the second resource in the first carrier are fixed, and at least one of the location, the size, and periodicity of the first resource is implicitly determined or determined based on the second control signaling. The second control signaling may be, but not limited to, MIB.

Optionally, in another embodiment, the resource determining unit 601 may be configured to: determine, based on a predetermined size of the first resource and location of the first resource in the first carrier, the first resource; or determine the first resource based on configuration information sent to the device in another control signaling.

In another embodiment, the first control signaling also may include information indicating a control sub-region outside the first resource; where the control sub-region is used for sending configuration signaling to the device, or used for sending the configuration signaling or scheduling signaling for data transmission.

Optionally, the first sending unit 602 can include: a scheduling information sending unit 6023 configured to sending scheduling information of the first control signaling to the device over a first channel (such as a common PDCCH) in the first resource, and a detailed information sending unit 6024 configured to send, detailed information of the first control signaling to the device over a second channel (such as a common PDSCH) in the first resource; wherein the scheduling information indicates a location of respective control information of the first control signaling in the second channel. In one embodiment, the location of the first channel and/or the second channel in the first resource may be predetermined, implicitly determined by the device, or signaled to the device. In another embodiment, the scheduling information sending unit 6023 can be configured to: send, over a common search space (CSS) in the first channel, common scheduling information for common control signaling in the first control signaling to the device; and send, over a UE-specific search space (USS) in the first channel, dedicated scheduling information for UE-specific control signaling in the first control signaling to the device.

Alternatively or additionally, the apparatus 600 can include: a third sending unit 604 configured to send information indicating a control sub-region outside the first resource over the first channel or the second channel; wherein the control sub-region is used for sending configuration signaling to the device, or used for sending the configuration signaling or scheduling signaling for data transmission. In one embodiment, the first channel includes a common search space (CSS) for sending common control signaling to the device; and the control sub-region comprises a UE-specific search space (USS) for sending UE-specific control signaling to the device.

As described above, in some embodiments, the location and/or size of the USS are configurable.

Optionally, in some embodiments, the first sending unit 602 may include: a power boosting unit 6025 configured to increase a transmission power on the first resource by taking a power of than resources in the first carrier except the first resource, and a signaling sending unit 6026 configured to send the first control signaling using increased transmission power.

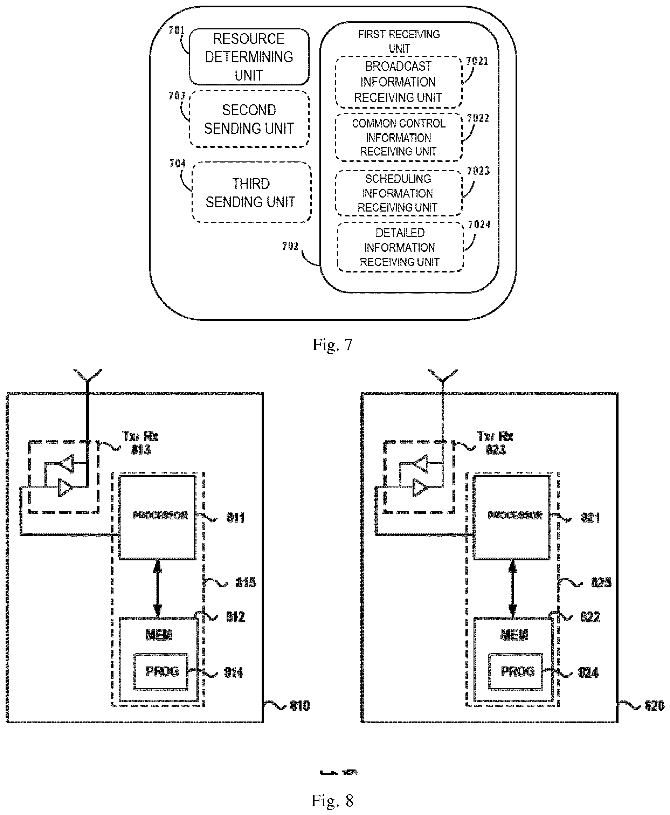

An apparatus 700 for receiving control signaling from an access node at a device of a wireless communication system in accordance with embodiments of the present disclosure is described below with reference to Fig. 7. The access node operates at the first carrier. The first carrier is placed at, but not limited to, a millimeter wave frequency band. In one embodiment, the wireless communications system, for example, may be the system 100 in Fig. 1 and the device may be the UE102 in Fig. 1.

The apparatus 700 can be used for, but not limited to, executing the method 500 described with reference to Figs. 5a-5b; the method 500, which is also described with reference to Figs. 5a-5b, can be implemented by (but not limited to) the apparatus 700. For example, one or more operations of the method 500 may be executed by other apparatuses.

As shown in Fig. 7, the apparatus 700 includes a resource determining unit 701 configured to determine, from a first carrier, a first resource for receiving first control signaling, a bandwidth of the first resource being lower than a total bandwidth of the first carrier; a first receiving unit 702 configured to receive the first control signaling from the access node with the first resource; wherein the first control signaling includes at least one of paging control information and system configuration information used by the device after access.

In one embodiment, the first control signaling received by the first receiving unit 702 of the apparatus 700 may be sent by the apparatus 600 executing the method 200 as described with reference to Figs. 2a-2b. Accordingly, various forms of the first signaling described above with reference to Figs. 2a-2b and 6 are also applicable here and will not be repeated. Similarly, the description regarding the first resource also can be applied here. For example, the first resource may be continuous resource in the aspect of time and/or frequency.

Furthermore, since the apparatus 700 may be configured to execute the method described with reference to Figs. 5a-5b in one embodiment, the resource determining unit 701 and the first receiving unit 702 may be respectively configured to execute the operations in blocks S501 and S502 of the method 500. Therefore, the descriptions with respect to the method 500, especially to the blocks S501 and S502, also may be applied here.

In one embodiment, the first receiving unit 702 may include: a broadcast information receiving unit 7021 configured to receive the broadcast control information over a broadcast channel, and a common information receiving unit 7022 configured to receive information of the first control signaling other than the broadcast control information over a common control channel,. In one embodiment, the broadcast channel and the common control channel can occupy adjacent resource regions in the first resource.

Optionally, in another embodiment, the apparatus 700 also can include a second receiving unit 703 configured to receive second control signaling from the access node with a second resource other than a first resource; the second control signaling, for example, can be MIB signaling while the second resource can be resource for PBCH. A location and a size of the second resource in the first carrier are fixed, and at least one of the location, the size, and periodicity of the first resource is implicitly determined by the device or determined based on the second control signaling.

In another embodiment, the resource determining unit 702 may be configured to: determine, based on a predetermined size of the first resource and location of the first resource in the first carrier, the first resource; or determine the first resource based on configuration information in another control signaling (such as signaling in PBCH or high-level signaling) from the access node.

In one embodiment, alternatively or additionally, the first receiving unit 701 can include: a scheduling information receiving unit 7023 configured to receive scheduling information of the first control signaling from the access node over a first channel (such as the common PDCCH) in the first resource, and a detailed information receiving unit 7024 configured to receive detailed information of the first control signaling from the access node over a second channel (such as the common PDSCH) in the first resource; wherein the scheduling information indicates a location of respective control information of the first control signaling in the second channel. As described above, the location of the first channel and/or the second channel in the first resource may be predetermined, implicitly determined by the device, or signaled to the device by the access node.

In one embodiment, the scheduling information receiving unit 7023 can be configured to: receive, over a common search space (CSS) in the first channel, common scheduling information for common control signaling in the first control signaling from the access node; and receive, over a UE-specific search space (USS) in the first channel, dedicated scheduling information for UE-specific control signaling in the first control signaling from the access node.

In another embodiment, the apparatus 700 also can include a third receiving unit 704 configured to receive information indicating a control sub-region outside the first resource over the first channel or the second channel,; wherein the control sub-region is used for receiving configuration signaling from the access node, or used for receiving the configuration signaling or scheduling signaling for data transmission. In another embodiment, the first channel includes a common search space (CSS) for receiving common control signaling from the access node; and the control sub-region comprises a UE-specific search space (USS) for receiving UE-specific control signaling from the access node.

As described above, in some embodiments, the location and/or size of the USS are configurable.

Optionally, the first receiving unit 702 may be configured to: receive, with the first resource, first control signaling with a boosted power from the access node.

Descriptions of example embodiments provided in the text have been presented for the purpose of illustration. The descriptions are not intended for exhausting the example embodiments or restricting the example embodiments as the exact forms of the present disclosure. Various modifications and changes can be made in accordance with the above teaching. Examples discussed in the text are selected and described to explain various example embodiments and principles and properties of their practical use, such that those skilled in the art can exploit the example embodiments in various ways and perform modifications which are suitable for the conceived specific purpose. Features of the embodiments described in the text can be combined in all possible combinations of method, apparatus, module, system and computer program product. It should be understood that example embodiments provided in the text can be implemented in any combinations thereof.

It should be appreciated that term "include" does not necessarily exclude the presence of other elements or steps apart from the listed ones, and the term "one" before the element does not exclude the presence of a plurality of such element. It should also be noted that any reference sign does not limit the scope of the claims and the example implementation can at least be partially implemented via hardware and software, and a plurality of "apparatuses," "units" or "devices" can be indicated with the same hardware item. Besides, it is obvious that the term "include" does not exclude other elements and steps and the expression "one" does not exclude plural case. Multiple elements stated in the apparatus claim also can be implemented by one element. Similarly, a single element stated in the apparatus claim also can be implemented by a distributed individual element. Moreover, each unit/module of the apparatus also can be distributed at different geographic locations in the system. "First," "second" and the like are used for denoting the name and do not indicate any particular sequence.

Various example embodiments described in a general context of method steps or processing can be implemented by the computer program product embodied in the computer-readable medium. The computer-executable instructions, associated data structure and program modules represent examples of program codes for executing the steps of the method in the present disclosure. Such executable instructions or particular sequence of the associated data structure represent examples for implementing corresponding actions of the functions described in the steps or processing.

Fig. 8 illustrates a simplified block diagram of apparatuses 810 and 820 suitable for implementing embodiments of the present disclosure. The apparatus 810 can be an access node or a part thereof, and the apparatus 820 can be a terminal device communicating with the access node or a part of such terminal device.

As shown in Fig. 8, the apparatus 810 includes at least one processor 811, such as Data Processor (DP), and at least one memory (MEM) 812 coupled to the processor 811. The apparatus 810 also can include an appropriate transceiver Tx/Rx 813 coupled to the processor 811. The memory 812 stores a program (PROG) 814, which can include instructions. The program, when executed in the associated processor 811, causes the apparatus 810, for example, to execute the method 200 in accordance with embodiments of the present disclosure. Tx/Rx 813 can be provided for, such as, two-way communications of the apparatus 820. Tx/Rx can have at least one antenna for communication. The processor 811 and the memory 812 are combined to form a processing apparatus 815, which is adapted to execute various embodiments of the present disclosure, such as the method 200 described with reference to Figs. 2a-2b.

The apparatus 820 includes at least one processor 821, such as Data Processor (DP), and at least one memory (MEM) 822 coupled to the processor 821. The apparatus 820 also can include an appropriate transceiver Tx/Rx 823 coupled to the processor 821. The memory 822 stores a program (PROG) 824, which can include instructions. The program, when executed in the associated processor 821, causes the apparatus 820, for example, to execute the method 500 in accordance with embodiments of the present disclosure. Tx/Rx 823 can be provided for, such as, two-way communications of the apparatus 810. Tx/Rx can have at least one antenna for communication. The processor 821 and the memory 822 are combined to form a processing apparatus 825, which is adapted to execute various embodiments of the present disclosure.

For those skilled in the art, it is obvious that the present disclosure is not restricted to the details of the above example embodiments and the present disclosure can be implemented in other detailed manner without deviating from the spirit or scope of the present disclosure. In any case, the embodiments should be considered as exemplary and non-limited. The scope of the present disclosure is defined only by the attached claims.

## Claims

1. A method of transmitting control signaling at an access node of a wireless communication system, the access node operating at a first carrier, the method comprising:

    determining, from a first carrier, a first resource for transmitting first control signaling, a bandwidth of the first resource being lower than a total bandwidth of the first carrier; and
    sending the first control signaling to a device with the first resource;

    wherein the first control signaling comprises at least one of paging control information and system configuration information used by the device after access.

2. The method of claim 1, wherein the first control signaling further comprises broadcast control information to enable the device to perform an access procedure.

3. The method of claim 2, wherein sending the first control signaling to the device with the first resource comprises:

sending the broadcast control information over a broadcast channel, and
sending information of the first control signaling other than the broadcast control information over a common control channel,

wherein the broadcast channel and the common control channel occupy adjacent resource regions in the first resource.

4. The method of claim 1, wherein the first control signaling comprises a plurality of control fields, and a sequence of the plurality of control fields and a type and a size of control information indicated by each of the plurality of control field are predetermined.

5. The method of claim 1, wherein the first control signaling comprises a plurality of control information elements, and each of the plurality of control information elements has a format of downlink control information (DCI) defined in a third generation partnership project (3GPP) long-term evolution (LTE) standard.

6. The method of claim 1, wherein the system configuration information comprises at least one of:

at least part of information in a system information block (SIB) defined in a third generation partnership project (3GPP) long-term evolution (LTE) standard;
information for updating configuration of the first resource;
information for power control; and
information for dynamic time division duplexing (TDD) configuration.

7. The method of claim 1, further comprising:

sending second control signaling to a device with a second resource other than the first resource,
wherein both a location and a size of the second resource in the first carrier are fixed, and at least one of the location, the size, and periodicity of the first resource is implicitly determined or determined based on the second control signaling.

8. The method of claim 1, wherein the first control signaling further comprises information indicating a control sub-region outside the first resource;
wherein the control sub-region is used for sending configuration signaling to the device, or used for sending the configuration signaling or scheduling signaling for data transmission.

9. The method of claim 1, wherein sending the first control signaling to the device with the first resource comprises:

sending scheduling information of the first control signaling to the device over a first channel in the first resource; and
sending detailed information of the first control signaling to the device over a second channel in the first resource;

wherein the scheduling information indicates a location of respective control information of the first control signaling in the second channel.

10. The method of claim 9, wherein sending the scheduling information of the first control signal to the device over a first channel in the first resource comprises:

sending, over a common search space (CSS) in the first channel, common scheduling information for common control signaling in the first control signaling to the device; and
sending, over a UE-specific search space (USS) in the first channel, dedicated scheduling information for UE-specific control signaling in the first control signaling to the device.

11. The method of claim 9, further comprising:

sending information indicating a control sub-region outside the first resource over the first channel or the second channel;
wherein the control sub-region is used for sending configuration signaling to the device, or used for sending the configuration signaling or scheduling signaling for data transmission.

12. The method of claim 11, wherein:

the first channel comprises a common search space (CSS) for sending common control signaling to the device; and
the control sub-region comprises a UE-specific search space (USS) for sending UE-specific control signaling to the device.

13. The method of claim 1, wherein sending the first control signaling to the device with the first resource comprises:

increasing a transmission power on the first resource by taking a power of other resources in the first carrier than the first resource; and
sending the first control signaling using the increased transmission power.

**14.** A method of receiving control signaling from an access node at a device of a wireless communication system, the access node operating at a first carrier, the method comprising:

determining, from a first carrier, a first resource for receiving first control signaling, a bandwidth of the first resource being lower than a total bandwidth of the first carrier; and
receiving the first control signaling from the access node with the first resource;

wherein the first control signaling comprises at least one of paging control information and system configuration information used by the device after access.

**15.** The method of claim 14, wherein the first control signaling further comprises broadcast control information to enable the device to perform an access procedure.

**16.** The method of claim 15, wherein receiving the first control signaling from the access node with the first resource comprises:

receiving the broadcast control information over a broadcast channel, and
receiving information of the first control signaling other than the broadcast control information over a common control channel,

wherein the broadcast channel and the common control channel occupy adjacent resource regions in the first resource.

**17.** The method of claim 14, wherein the first control signaling comprises a plurality of control fields, and a sequence of the plurality of control fields and a type and a size of control information indicated by each of the plurality of control field are predetermined.

**18.** The method of claim 14, wherein the first control signaling comprises a plurality of control information elements, and each of the plurality of control information elements has a format of downlink control information (DCI) defined in a third generation partnership project (3GPP) long-term evolution (LTE) standard.

**19.** The method of claim 14, wherein the system configuration information comprises at least one of:

at least part of information in a system information block (SIB) defined in a third generation partnership project (3GPP) long-term evolution (LTE) standard;
information for updating configuration of the first resource;
information for power control; and
information for dynamic time division duplex (TDD) configuration.

**20.** The method of claim 14, further comprising:

receiving second control signaling from the access node with a second resource other than the first resource,
wherein both a location and a size of the second resource in the first carrier are fixed, and at least one of the location, the size, and periodicity of the first resource is implicitly determined by the device or determined based on the second control signaling.

**21.** The method of claim 14, wherein the first control signaling further comprises information indicating a control sub-region outside the first resource;
wherein the control sub-region is used for receiving configuration signaling from the access node, or used for receiving the configuration signaling or scheduling signaling for data transmission.

**22.** The method of claim 14, wherein receiving the first control signaling from the access node with the first resource comprises:

receiving scheduling information of the first control signaling from the access node over a first channel in the first resource; and
receiving detailed information of the first control signaling from the access node over a second channel in the first resource;

wherein the scheduling information indicates a location of respective control information of the first control signaling in the second channel.

**23.** The method of claim 22, wherein receiving the scheduling information of the first control signal from the access node over a first channel in the first resource comprises:

receiving, over a common search space (CSS) in the first channel, common scheduling information for common control signaling in the first control signaling from the access node; and
receiving, over a UE-specific search space (USS) in the first channel dedicated scheduling information for UE-specific control signaling in the first control signaling from the access node.

**24.** The method of claim 22, further comprising:

receiving information indicating a control sub-region outside the first resource over the first channel or the second channel;

wherein the control sub-region is used for receiving configuration signaling from the access node, or used for receiving the configuration signaling or scheduling signaling for data transmission.

25. The method of claim 24, wherein:

the first channel comprises a common search space (CSS) for receiving common control signaling from the access node; and the control sub-region comprises a UE-specific search space (USS) for receiving UE-specific control signaling from the access node.

26. The method of claim 14, wherein receiving the first control signaling from the access node with the first resource comprises:

receiving, with the first resource, first control signaling with a boosted power from the access node.

27. An apparatus for transmitting control signaling at an access node of a wireless communication system, the access node operating at a first carrier, the apparatus comprising:

a resource determining unit configured to determine, from a first carrier, a first resource for transmitting first control signaling, a bandwidth of the first resource being lower than a total bandwidth of the first carrier; and a first sending unit configured to send the first control signaling to a device with the first resource;

wherein the first control signaling comprises at least one of paging control information and system configuration information used by the device after access.

28. The apparatus of claim 27, wherein the first control signaling further comprises broadcast control information to enable the device to perform an access procedure.

29. The apparatus of claim 27, wherein the first sending unit comprises:

a broadcast information sending unit configured to send the broadcast control information over a broadcast channel, and a common control information sending unit configured to send information of the first control signaling other than the broadcast control information over a common control channel,

wherein the broadcast channel and the common control channel occupy adjacent resource regions in the first resource.

30. The apparatus of claim 27, wherein the first control signaling comprises a plurality of control fields, and a sequence of the plurality of control fields and a type and a size of control information indicated by each of the plurality of control field are predetermined.

31. The apparatus of claim 27, wherein the first control signaling comprises a plurality of control information elements, and each of the plurality of control information elements has a format of downlink control information (DCI) defined in a third generation partnership project (3GPP) long-term evolution (LTE) standard.

32. The apparatus of claim 27, wherein the system configuration information comprises at least one of:

at least part of information in a system information block (SIB) defined in a third generation partnership project (3GPP) long-term evolution (LTE) standard; information for updating configuration of the first resource; information for power control; and information for dynamic time division duplex (TDD) configuration.

33. The apparatus of claim 27, further comprising:

a second sending unit configured to send second control signaling to a device with a second resource other than the first resource, wherein both a location and a size of the second resource in the first carrier are fixed, and at least one of the location, the size, and periodicity of the first resource is implicitly determined or determined based on the second control signaling.

34. The apparatus of claim 27, wherein the first control signaling further comprises information indicating a control sub-region outside the first resource; wherein the control sub-region is used for sending configuration signaling to the device, or used for sending the configuration signaling or scheduling signaling for data transmission.

35. The apparatus of claim 27, wherein the first sending unit comprises:

a scheduling information sending unit configured to send scheduling information of the first control signaling to the device over a first channel in the first resource; and a detailed information sending unit configured to send detailed information of the first control signaling to the device over a second channel in the first resource;

wherein the scheduling information indicates a location of respective control information of the first control signaling in the second channel.

36. The apparatus of claim 35, wherein the scheduling information sending unit is configured to:

send, over common search space (CSS) in the first channel, common scheduling information for common control signaling in the first control signaling to the device; and
send, over a UE-specific search space (USS) in the first channel, dedicated scheduling information for UE-specific control signaling in the first control signaling to the device.

37. The apparatus of claim 35, further comprising:

a third sending unit configured to send information indicating a control sub-region outside the first resource over the first channel or the second channel;
wherein the control sub-region is used for sending configuration signaling to the device, or used for sending the configuration signaling or scheduling signaling for data transmission.

38. The apparatus of claim 37, wherein:

the first channel comprises a common search space (CSS) for sending common control signaling to the device; and
the control sub-region comprises a UE-specific search space (USS) for sending UE-specific control signaling to the device.

39. The apparatus of claim 27, wherein the first sending unit comprises:

a power boosting unit configured to increase a transmission power on the first resource by taking a power of other resources in the first carrier than the first resource; and
a signaling sending unit configured to send the first control signaling using the increased transmission power.

40. An apparatus for receiving control signaling from an access node at a device of a wireless communication system, the access node operating at a first carrier, the apparatus comprising:

a resource determining unit configured to determine, from a first carrier, a first resource for receiving first control signaling, a bandwidth of the first resource being lower than a total bandwidth of the first carrier; and
a first receiving unit configured to receive the first control signaling from the access node with the first resource;

wherein the first control signaling comprises at least one of paging control information and system configuration information used by the device after access.

41. The apparatus of claim 40, wherein the first control signaling further comprises broadcast control information to enable the device to perform an access procedure.

42. The apparatus of claim 41, wherein the first receiving unit comprises:

a broadcast information receiving unit configured to receive the broadcast control information over a broadcast channel, and
a common information receiving unit configured to receive information of the first control signaling other than the broadcast control information over a common control channel,

wherein the broadcast channel and the common control channel occupy adjacent resource regions in the first resource.

43. The apparatus of claim 40, wherein the first control signaling comprises a plurality of control fields, and a sequence of the plurality of control fields and a type and a size of control information indicated by each of the plurality of control field are predetermined.

44. The apparatus of claim 40, wherein the first control signaling comprises a plurality of control information elements, and each of the plurality of control information elements has a format of downlink control information (DCI) defined in a third generation partnership project (3GPP) long-term evolution (LTE) standard.

45. The apparatus of claim 40, wherein the system configuration information comprises at least one of:

at least part of information in a system information block (SIB) defined in a third generation partnership project (3GPP) long-term evolution (LTE) standard;
information for updating configuration of the first resource;
information for power control; and
information for dynamic time division duplex (TDD) configuration.

**46.** The apparatus of claim 40, further comprising:

a second receiving unit configured to receive second control signaling from the access node with a second resource other than the first resource,
wherein both a location and a size of the second resource in the first carrier are fixed, and at least one of the location, the size, and periodicity of the first resource is implicitly determined by the device or determined based on the second control signaling.

**47.** The apparatus of claim 40, wherein the first control signaling further comprises information indicating a control sub-region outside the first resource;
wherein the control sub-region is used for receiving configuration signaling from the access node, or used for receiving the configuration signaling or scheduling signaling for data transmission.

**48.** The apparatus of claim 40, wherein the first receiving unit comprises:

a scheduling information receiving unit configured to receive scheduling information of the first control signal from the access node with a first channel in the first resource; and
a detailed information receiving unit configured to receive detailed information of the first control signaling from the access node over a second channel in the first resource,;

wherein the scheduling information indicates a location of respective control information of the first control signaling in the second channel.

**49.** The apparatus of claim 48, wherein the scheduling information receiving unit is configured to:

receive, over a common search space (CSS) in the first channel, common scheduling information for common control signaling in the first control signaling from the access node; and
receive, over a UE-specific search space (USS) in the first channel, dedicated scheduling information for UE-specific control signaling in the first control signaling from the access node.

**50.** The apparatus of claim 48, further comprising:

a third receiving unit configured to receive information indicating a control sub-region outside the first resource over the first channel or the second channel;
wherein the control sub-region is used for receiving configuration signaling from the access node, or used for receiving the configuration signaling.

naling or scheduling signaling for data transmission.

**51.** The apparatus of claim 50, wherein:

the first channel comprises a common search space (CSS) for receiving common control signaling from the access node; and
the control sub-region comprises a UE-specific search space (USS) for receiving UE-specific control signaling from the access node.

**52.** The apparatus of claim 40, wherein the first receiving unit is configured to: receive, with the first resource, first control signaling with a boosted power from the access node.

**53.** An apparatus at an access node of a wireless communication system, the apparatus comprising at least one processor; and at least one memory including computer program codes, wherein the at least one memory and the computer program codes are configured to:

cause, together with the at least one processor, the apparatus to execute the method according to any one of claims 1-13.

**54.** An apparatus at a device of a wireless communication system, the apparatus comprising at least one processor; and at least one memory including computer program codes, wherein the at least one memory and the computer program codes are configured to:

cause, together with the at least one processor, the apparatus to execute the method according to any one of claims 14-26.

**55.** An apparatus at an access node of a wireless communication system, the access node operating at a first carrier and the apparatus including processing components adapted to execute the method according to any one of claims 1-13.

**56.** An apparatus communicating with an access node at a device of a wireless communication system, the access node operating at a first carrier and the apparatus including processing components adapted to execute the method according to any one of claims 14-26.

**57.** A computer program product including computer storage medium, wherein the computer storage medium include instructions, which instructions, when executed in at least one processor, cause the at least one processor to execute the method according to any one of claims 1-13.

**EP 3 451 760 A1**

**58.** A computer program product including computer storage medium, wherein the computer storage medium include instructions, which instructions, when executed in at least one processor, cause the at least one processor to execute the method according to any one of claims 14-26.

ACCESS
NODE
101

103  UE

102  UE

100

104  UE

Fig. 1

S201
DETERMINE A FIRST RESOURCE IN A FIRST CARRIER FOR TRANSMITTING FIRST CONTROL SIGNALING, THE BANDWIDTH OF THE FIRST RESOURCE BEING LESS THAN THE TOTAL BANDWIDTH OF THE FIRST CARRIER

S203
SEND SECOND CONTROL SIGNALING TO THE DEVICE BY MEANS OF THE SECOND RESOURCE OTHER THAN THE FIRST RESOURCE, THE LOCATION AND THE SIZE OF THE SECOND RESOURCE IN THE FIRST CARRIER BEING FIXED, AND AT LEAST ONE OF THE LOCATION, THE SIZE, AND THE PERIODICITY OF THE FIRST RESOURCE BEING IMPLICITLY DETERMINED OR DETERMINED ON THE BASIS OF THE SECOND CONTROL SIGNALING

S202
SEND THE FIRST CONTROL SIGNALING TO A DEVICE BY MEANS OF THE FIRST RESOURCE, WHEREIN THE FIRST CONTROL SIGNALING COMPRISES AT LEAST ONE OF PAGING CONTROL INFORMATION AND SYSTEM CONFIGURATION INFORMATION USED BY THE DEVICE AFTER ACCESSING THE NODE

S204
SEND, BY MEANS OF THE FIRST CHANNEL OR A SECOND CHANNEL IN THE FIRST RESOURCE, INFORMATION FOR INDICATING A SUB-CONTROL REGION OUTSIDE THE FIRST RESOURCE

200

Fig. 2a

SEND THE BROADCAST CONTROL INFORMATION IN THE FIRST SIGNALING OVER A BROADCAST CHANNEL — S2021

SEND INFORMATION OF THE FIRST CONTROL SIGNALING OTHER THAN THE BROADCAST CONTROL INFORMATION OVER A COMMON CONTROL CHANNEL — S2022

SEND SCHEDULING INFORMATION OF THE FIRST CONTROL SIGNALING TO THE DEVICE OVER A FIRST CHANNEL IN THE FIRST RESOURCE — S2023

SEND DETAILED INFORMATION OF THE FIRST CONTROL SIGNALING TO THE DEVICE OVER A SECOND CHANNEL IN THE FIRST RESOURCE — S2024

INCREASE A TRANSMISSION POWER ON THE FIRST RESOURCE BY TAKING A POWER OF OTHER RESOURCES IN THE FIRST CARRIER THAN THE FIRST RESOURCE — S2025

SEND THE FIRST CONTROL SIGNALING USING THE INCREASED TRANSMISSION POWER — S2026

S202

Fig. 2b

ONE DL TIME SLOT
$N_{symb}^{DL}$ OFDM SYMBOL

$N_{RB}^{DL} \times N_{sc}^{RB}$ SUB-FRAME

CENTER RBs/FIXED RBs

PDCCH

$l = 0$      $l = N_{symb}^{DL} - 1$

CONTROL SUB-REGION

NARROWBAND COMMON CONTROL REGION

DL TIME SLOT $t$     DL TIME SLOT $t+1$     DL TIME SLOT $t+2$

Fig. 3

ONE DL TIME SLOT

$N_{symb}^{DL}$ OFDM SYMBOL

$N_{RB}^{DL} \times N_{sc}^{RB}$ SUB-FRAME

CENTER RBs=FIXED RBs

PDCCH

$l = 0$     $l = N_{symb}^{DL} - 1$

DL TIME SLOT $t$        DL TIME SLOT $t+1$        DL TIME SLOT $t+2$  · · · · · · ·

CONTROL SUB-REGION

COMMON PDCCH REGION

COMMON PDSCH REGION

Fig. 4

S501

DETERMINE, FROM A FIRST CARRIER, A FIRST RESOURCE FOR RECEIVING FIRST CONTROL SIGNALING, A BANDWIDTH OF THE FIRST RESOURCE BEING LOWER THAN A TOTAL BANDWIDTH OF THE FIRST CARRIER

S503

RECEIVE SECOND CONTROL SIGNALING FROM THE ACCESS NODE WITH A SECOND RESOURCE OTHER THAN THE FIRST RESOURCE, WHEREIN A LOCATION AND A SIZE OF THE SECOND RESOURCE IN THE FIRST CARRIER ARE FIXED, AND AT LEAST ONE OF THE LOCATION, THE SIZE, AND PERIODICITY OF THE FIRST RESOURCE IS IMPLICITLY DETERMINED OR DETERMINED BASED ON THE SECOND CONTROL SIGNALING

S502

RECEIVE THE FIRST CONTROL SIGNALING FROM THE ACCESS NODE WITH THE FIRST RESOURCE; WHEREIN THE FIRST CONTROL SIGNALING INCLUDES AT LEAST ONE OF PAGING CONTROL INFORMATION AND SYSTEM CONFIGURATION INFORMATION USED BY THE DEVICE AFTER ACCESS

S504

RECEIVE INFORMATION INDICATING A CONTROL SUB-REGION OUTSIDE THE FIRST RESOURCE IN THE FIRST RESOURCE OVER THE FIRST CHANNEL OR THE SECOND CHANNEL

500

Fig. 5a

RECEIVE THE BROADCAST CONTROL INFORMATION OVER A BROADCAST CHANNEL

S5021

RECEIVE INFORMATION OF THE FIRST CONTROL SIGNALING OTHER THAN THE BROADCAST CONTROL INFORMATION OVER A COMMON CONTROL CHANNEL

S5022

RECEIVE SCHEDULING INFORMATION OF THE FIRST CONTROL SIGNALING FROM THE ACCESS NODE OVER A FIRST CHANNEL IN THE FIRST RESOURCE

S5023

RECEIVE DETAILED INFORMATION OF THE FIRST CONTROL SIGNALING FROM THE ACCESS NODE OVER A SECOND CHANNEL IN THE FIRST RESOURCE

S5024

S502

Fig. 5b

RESOURCE DETERMINING UNIT  601

SECOND SENDING UNIT  603

THIRD SENDING UNIT  604

FIRST SENDING UNIT
- BROADCAST INFORMATION SENDING UNIT  6021
- COMMON CONTROL INFORMATION SENDING UNIT  6022
- SCHEDULING INFORMATION SENDING UNIT  6023
- DETAILED INFORMATION SENDING UNIT  6024
- POWER BOOSTING UNIT  6025
- SIGNALING SENDING UNIT  6026

602

600

Fig. 6

Fig. 7

Fig. 8

# INTERNATIONAL SEARCH REPORT

| | |
|---|---|
| International application No. | |
| | **PCT/CN2016/079079** |

**A.  CLASSIFICATION OF SUBJECT MATTER**

H04W 72/04 (2009.01) i

According to International Patent Classification (IPC) or to both national classification and IPC

**B.  FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPI; EPODOC; CNKI; IEEE; CNPAT: millimetre wave, signalling, mmw, carrier, control signaling, resource, bandwidth

**C.  DOCUMENTS CONSIDERED TO BE RELEVANT**

| Category* | Citation of document, with indication, where appropriate, of the relevant passages | Relevant to claim No. |
|---|---|---|
| X | CN 101155400 A (BEIJING SAMSUNG COMMUNICATION TECHNOLOGY RESEARCH INSTITUTE et al.), 02 April 2008 (02.04.2008), description, page 9, line 6 to page 10, line 19 and page 11, line 13 to page 16, line 20 | 1-58 |
| A | CN 101841866 A (BEIJING INNOFIDEI TECHNOLOGY CO., LTD.), 22 September 2010 (22.09.2010), the whole document | 1-58 |
| A | CN 101132204 A (BEIJING SAMSUNG COMMUNICATION TECHNOLOGY RESEARCH INSTITUTE et al.), 27 February 2008 (27.02.2008), the whole document | 1-58 |
| A | CN 101132229 A (BEIJING SAMSUNG COMMUNICATION TECHNOLOGY RESEARCH INSTITUTE et al.), 27 February 2008 (27.02.2008), the whole document | 1-58 |
| A | US 2013242751 A1 (INNOVATIVE SONIC CORP.), 19 September 2013 (19.09.2013), the whole document | 1-58 |

☐ Further documents are listed in the continuation of Box C.      ☒ See patent family annex.

| | | |
|---|---|---|
| *  Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier application or patent but published on or after the international filing date | "X" | document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| | |
|---|---|
| Date of the actual completion of the international search | Date of mailing of the international search report |
| 19 December 2016 (19.12.2016) | **29 December 2016 (29.12.2016)** |
| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SUN, Guohui** Telephone No.: (86-10) **61648242** |

Form PCT/ISA/210 (second sheet) (July 2009)

## INTERNATIONAL SEARCH REPORT
Information on patent family members

International application No.

**PCT/CN2016/079079**

| Patent Documents referred in the Report | Publication Date | Patent Family | Publication Date |
|---|---|---|---|
| CN 101155400 A | 02 April 2008 | None | |
| CN 101841866 A | 22 September 2010 | CN 101841866 B | 05 December 2012 |
| CN 101132204 A | 27 February 2008 | None | |
| CN 101132229 A | 27 February 2008 | None | |
| US 2013242751 A1 | 19 September 2013 | US 2013242901 A1 | 19 September 2013 |
| | | TW 201342970 A | 16 October 2013 |

Form PCT/ISA/210 (patent family annex) (July 2009)